# EUROPEAN PATENT APPLICATION

(11) **EP 1 480 139 A2**
(43) Date of publication of application: **24.11.2004**
(21) Application number: 04252405.8
(22) Date of filing: 24.04.2004
(51) Int. Cl.: G06F 17/30

(54) **Searching element-based document descriptions in a database**

(30) Priority: 19.05.2003 US 440870
(71) Applicant: NCR INTERNATIONAL INC., Dayton, Ohio 45479 (US)
(72) Inventor: Chien, Shu-Yao, Los Angeles, CA 90034 (US); Zhou, Xin, Los Angeles, CA 90066 (US)
(74) Representative: Williamson, Brian

(57) **Abstract**

A method, computer program, and database system are disclosed for querying a stored element-based document description. The database system includes one or more nodes. Each of the one or more nodes provides access to one or more of a plurality of CPUs. Each of the one or more CPUs provides access to one or more of a plurality of virtual processes. Each virtual process is configured to manage data stored in one of a plurality of data-storage facilities. The data stored in the plurality of data-storage facilities includes data representing a database table. A row of the table corresponds to an element of the element-based document description and includes: data describing the element, an order identifier corresponding to the element, and a range identifier corresponding to the element. The data stored in the plurality of data-storage facilities also includes a tag table with one or more rows including tags and table location data. A query execution program in configured to receive a query specifying at least one tag, compare one of the specified tags with the tag table, identify at least one row of the tag table corresponding to the specified tag, read table location data from the at least one row of the tag table, and output a query response including information from one or more database table rows corresponding to the table location data, each database table row including an order identifier and a range identifier.

## Description

Element-based descriptions of documents can be found in descriptions prepared in accordance with particular markup languages. For example, the Standard Generalized Markup Language (SGML) was developed and adopted by the International Standards Organization (ISO) in 1986. Another example, the extensible Markup Language (XML), also defines rules for describing documents using elements. XML is used currently to define many documents to which access is provided over the Internet.

When a document is described in terms of elements, whether in accordance with SGML, XML, or using a nonstandard approach, the elements are often related to one another in a manner beyond sequence. For example, while a document might consist of only a list of paragraph elements without any other structure, many documents will also include chapters, into which paragraphs are grouped. As an example, a chapter element may include a title element and a number of paragraph elements. The title and paragraph elements are each nested within the chapter element because they begin and end after the chapter element begins, but before it ends.

Databases are used to store and retrieve information. One type of information that can be stored is element-based document descriptions. For example, a database user may desire to store all the XML documents that are located on a website. The independent elements of the XML document, by themselves, do not contain the same information as the XML document because the sequential and nesting relationships between the elements are information included in the XML document.

Once an element-based document description is stored in a database system, users of that database system may submit queries regarding the information. A user may desire information concerning a particular element or information regarding the structure of the document description. It is useful to determine the answers to structural queries concerning an element-based document description stored in a database system.

In general, in one aspect, the invention features a database system for querying a stored element-based document description. The database system includes one or more nodes. Each of the one or more nodes provides access to one or more of a plurality of CPUs. Each of the one or more CPUs provides access to one or more of a plurality of virtual processes. Each virtual process is configured to manage data stored in one of a plurality of data-storage facilities. The data stored in the plurality of data-storage facilities includes data representing a database table. A row of the table corresponds to an element of the element-based document description and includes: data describing the element, an order identifier corresponding to the element, and a range identifier corresponding to the element. The data stored in the plurality of data-storage facilities also includes a tag table with one or more rows including tags and table location data. A query execution program in configured to receive a query specifying at least one tag, compare one of the specified tags with the tag table, identify at least one row of the tag table corresponding to the specified tag, read table location data from the at least one row of the tag table, and output a query response including information from one or more database table rows corresponding to the table location data, each database table row including an order identifier and a range identifier.

Implementations of the invention may include one or more of the following. If the query includes a tag range, the query execution program is further configured to read an order identifier from one or more database table rows corresponding to the table location data and compare the relative value of the order identifier with the tag range. If the query specifies at least two tags and a level difference, the row of the first database table includes a level identifier. The query execution program is further configured to compare the difference between a level identifier stored in a database row corresponding to one tag with a level identifier stored in a database row corresponding to another tag with the level difference.

In general, in another aspect, the invention features a computer program for querying a database-stored element-based document description. The program include executable instructions that cause a computer to perform the following steps. A query specifying at least one tag is received. One of the specified tags is compared to a tag table. At least one row of the tag table corresponding to the specified tag is identified. Table location data is read from the at least one row of the tag table. A query response is outputted that includes information from one or more database table rows corresponding to the table location data, each database table row including an order identifier and a range identifier.

In general, in another aspect, the invention features a method for querying a database-stored element-based document description. A query specifying at least one tag is received. One of the specified tags is compared to a tag table. At least one row of the tag table corresponding to the specified tag is identified. Table location data is read from the at least one row of the tag table. A query response is outputted that includes information from one or more database table rows corresponding to the table location data, each database table row including an order identifier and a range identifier.

An embodiment of the present invention will now be described, by way of example with reference to the accompanying drawings, in which:
Fig. 1 is a block diagram of a node of a parallel processing database system;
Fig. 2 is an XML document that describes a book;
Fig. 3 is partial tag table corresponding to database storage of the XML document shown in Fig. 2;
Fig. 4 is a first table including rows corresponding to elements of the XML document of Fig. 2 with the title tag;
Fig. 5 is a flow chart of one method for querying a database-stored element-based document description;
Fig. 6 is a flow chart of one method for querying a database-stored element-based document description; and
Fig. 7 is a flow chart of one method for querying a database-stored element-based document description.

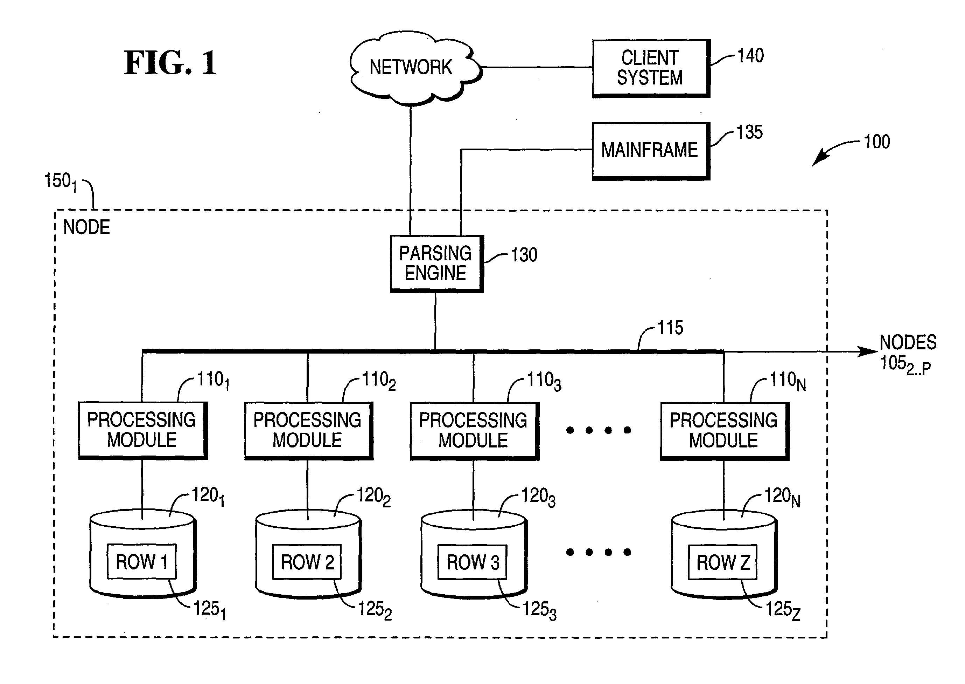

The search techniques disclosed herein have particular application, but are not limited, to large databases that might contain many millions or billions of records managed by a database system ("DBS") 100, such as a Teradata Active Data Warehousing System available from NCR Corporation. Figure 1 shows a sample architecture for one node 105₁ of the DBS 100. The DBS node 105₁ includes one or more processing modules 110_{1...N}, connected by a network 115, that manage the storage and retrieval of data in data-storage facilities 120_{1...N}. Each of the processing modules 110_{1...N} may be one or more physical processors or each may be a virtual processor, with one or more virtual processors running on one or more physical processors.

For the case in which one or more virtual processors are running on a single physical processor, the single physical processor swaps between the set of N virtual processors.

For the case in which N virtual processors are running on an M-processor node, the node's operating system schedules the N virtual processors to run on its set of M physical processors. If there are 4 virtual processors and 4 physical processors, then typically each virtual processor would run on its own physical processor. If there are 8 virtual processors and 4 physical processors, the operating system would schedule the 8 virtual processors against the 4 physical processors, in which case swapping of the virtual processors would occur.

Each of the processing modules 110_{1...N} manages a portion of a database that is stored in a corresponding one of the data-storage facilities 120_{1...N}. Each of the data-storage facilities 120_{1...N} includes one or more disk drives. The DBS may include multiple nodes 105_{2...N} in addition to the illustrated node 105₁, connected by extending the network 115.

The system stores data in one or more tables in the data-storage facilities 120₁..._{N}. The rows 125_{1...Z} of the tables are stored across multiple data-storage facilities 120_{1...N} to ensure that the system workload is distributed evenly across the processing modules 110_{1...N}. A parsing engine 130 organizes the storage of data and the distribution of table rows 125_{1...Z} among the processing modules 110_{1...N}. The parsing engine 130 also coordinates the retrieval of data from the data-storage facilities 120_{1...N} in response to queries received from a user at a mainframe 135 or a client computer 140. The DBS 100 usually receives queries and commands to build tables in a standard format, such as SQL.

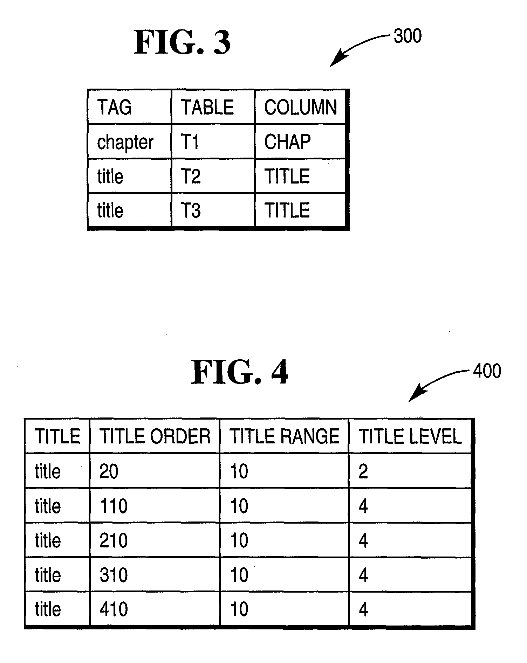

In one implementation, the rows 125_{1...Z} are distributed across the data-storage facilities 120_{1...N} by the parsing engine 130 in accordance with their primary index. The primary index defines the columns of the rows that are used for calculating a hash value. See discussion of Figure 3 below for an example of a primary index. The function that produces the hash value from the values in the columns specified by the primary index is called the hash function. Some portion, possibly the entirety, of the hash value is designated a "hash bucket". The hash buckets are assigned to data-storage facilities 120_{1...N} and associated processing modules 110_{1...N} by a hash bucket map. The characteristics of the columns chosen for the primary index determine how evenly the rows are distributed.

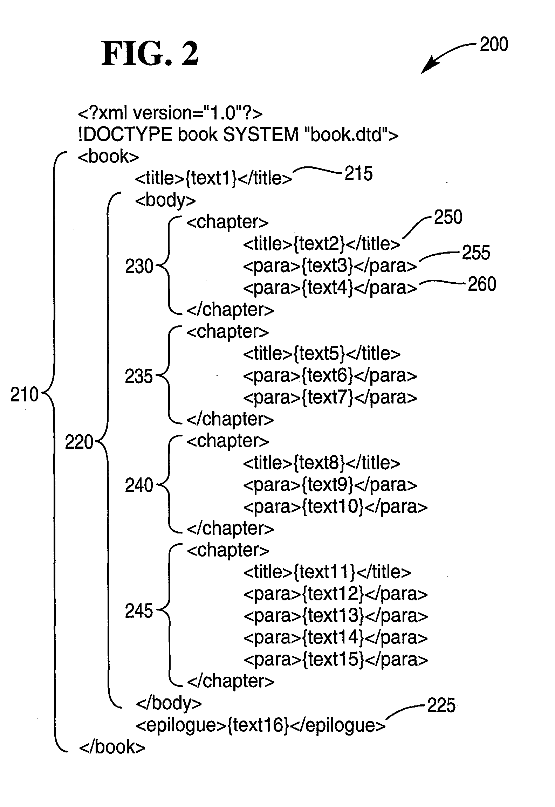

Figure 2 depicts an example XML document 200. Each element begins with a tag and ends with that tag preceded by a forward slash. The top level element 210 is tagged as the book element. Within that element, there are a title element 215, a body element 220 and an epilogue element 225. The body element 220 is further broken down into four chapters 230, 235, 240, 245. Each chapter includes a title and paragraphs, for example the first chapter includes a title 250 and two paragraphs 255, 260. The element name para is used to denote a paragraph. Many of the elements are nested. For example, all of the chapters 230,235,240,245 are nested in the body 220, which is nested in the book 210. The extent of the nesting of an element determines its level. For example, the book element 210 is at the first level, while a paragraph 260 of the first chapter 230 is at the fourth level. Elements with the same tag do not have to be at the same level. For example, a title element 215 is at the second level, while another title element 250 is at the fourth level.

While the indenting used in the XML document 200 corresponds to the structure of the book and makes it easier to see, the structure could be deduced from the language. All of the title, body, chapter, para, and epilogue elements are subelements of the book element 210 because they are each listed after the book element is introduced by <book> and before it ends at </book>. Similarly, title element 250 and para elements 255, 260 are subelements of chapter element 230 because each is listed after that chapter element is introduced by <chapter> and before it ends at </chapter>.

Figure 3 shows a portion of a tag table 300 for the elements used in the XML document depicted in Fig. 2. In one implementation, the tag table does not store the rows that correspond to individual elements, but does store the mapping from element tags to table fields. In other implementations, the tag table can match tags to other table location data. The portion of the tag table 300 shown in Figure 3, shows rows corresponding to the tags chapter and title. The table location data for the tag chapter includes table T1 and field/column CHAP. The table location data for the tag title includes table T2 and field/column TITLE in addition to table T3, and field/column TITLE. In another implementation, the tag table 300, includes fields for many instances of table location data, which accommodates databases in which elements with the same tag are stored in many different tables.

Figure 4 shows example rows (or records) 400 corresponding to the title tag as used in the XML document depicted in Fig. 2. In one implementation, the rows are contained in one table. In another implementation, the rows are contained in a plurality of tables. In the depicted implementation, each row includes the tag name, title, the order identifier for that element, the range identifier for that element, and a level identifier for that element. The level identifier represents the depth of the element in the tree representation of the XML document (or other element-based document description). In one implementation, the top level element has a level identifier of 1 and nested elements have level identifiers equal to the sum of 1 and the number of elements in which they are nested.

The order identifier represents the position in the XML document (or other element-based document description) in which the element begins. In one implementation, an element with a higher order identifier begins later in the document than an element with a lower order identifier. The range identifier represents the position in the XML document (or other element-based document description) in which the element ends. In one implementation, the range identifier is a value that is added to the order identifier to determine the order identifier value at which the element ends. In another implementation, the range identifier is the value of the order identifier at which the elements ends. However the range identifier is configured, the combination of the order identifier and range identifier (referred to herein as an order identifier-range identifier pair) specifies a range of order identifiers for the parent element. Any elements in that range are nested in the parent element.

For example, the first title row in table 400 indicates an order identifier of 20, a range identifier of 10, and a level identifier of 2. The XML document depicted in Fig. 2 has five different title elements. One of those title elements 215 precedes the body element 220. The other four title elements, e.g., 250, are nested inside the chapter elements 230, 235, 240, 245. Only the first title element 215 has a single parent element, the book element 210, and therefore corresponds to the first title element row in table 400 which has a title level of 2. Based on the title element's order identifier of 20, the order identifier of the book element 210 must be less than 20, e.g., 10, because the title element 215 is nested in the book element 210. Conversely, the order identifier of the body element 220 must be greater than 30 because the body element 220 follows, but is not nested in, the title element 215. By having an order identifier greater than 30 the body element 220 will not be within the range, 20 to 30, of the title element 215.

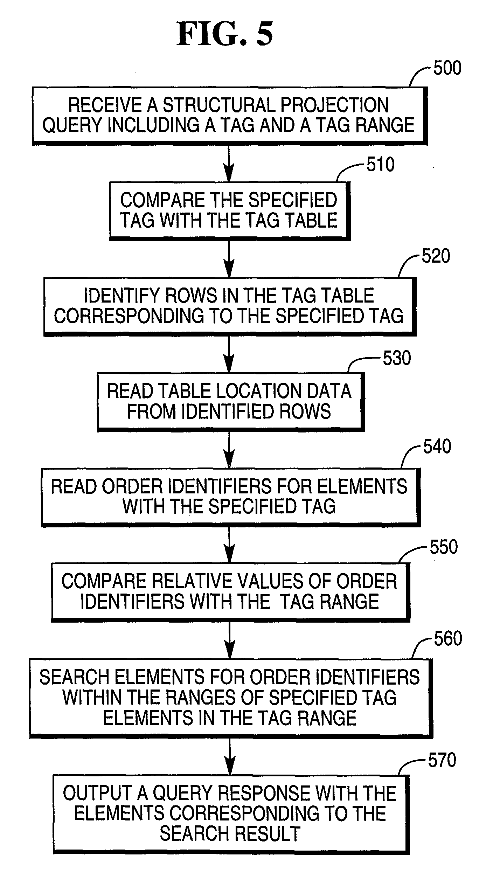

Figure 5 is a flow chart of one method for querying a database-stored element-based document description. In this method, a structural projection query including a tag and a tag range is received 500. The tag specified in the query is compared to the tag table 510. Rows in the tag table that correspond to the specified tag are identified 520. The table location data stored in the identified rows is read 530. For example, if the tag table is implemented in accordance with Figure 3, the table location data would comprise table and field identifiers. Order identifiers are read from the table locations 540. The relative values of the order identifiers are compared with the query-specified tag range 550. The corresponding order identifiers define a range of order identifier values and a search for all elements with order identifiers in that range is performed 560. A query response is then output with the elements resulting from the search 570.

As an example of a structural projection query, a user could ask the database system to project the part of the document between the second and fifth titles. To answer the query the database system accesses the order identifiers of all the titles, which are 20, 110, 210, 310, 410. In one implementation, the database system maintains an index, ti_index, that has the ordered list of order identifiers for title elements. In another implementation, the tag table is accessed and the order identifiers are retrieved from the tables specified in the table location data for the title tag. From the relative values of the order identifiers, the second and fifth titles are identified as having order identifiers 110 and 410. All the elements can then be search for order identifiers in this range and those elements are output as the answer to the query.

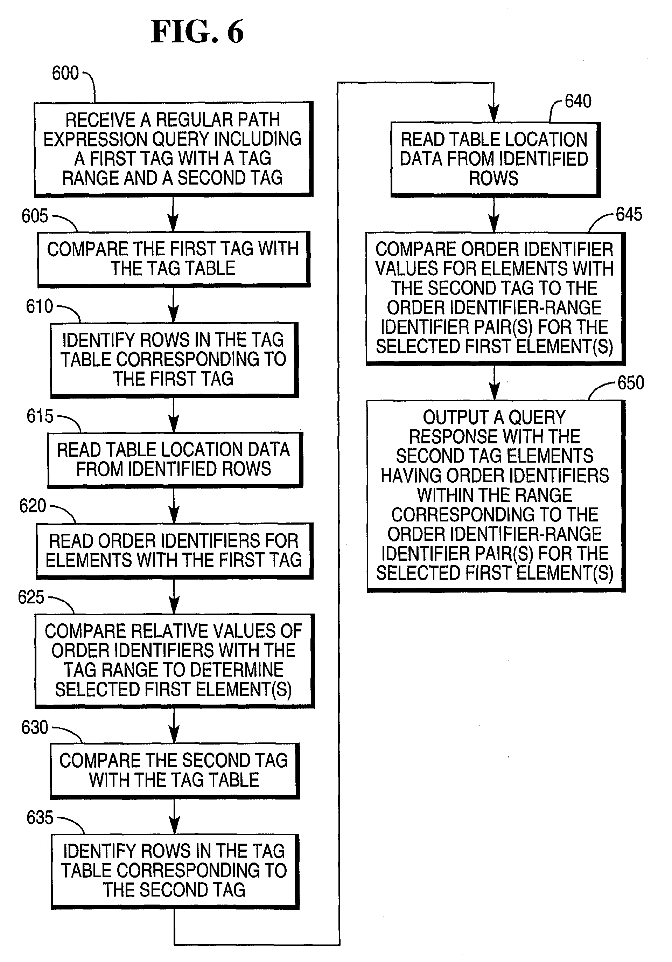

Figure 6 is a flow chart of one method for querying a database-stored element-based document description. In this method, a regular path expression query is received that includes a first tag with a tag range and a second tag 600. The first tag is compared to the tag table 605. Rows in the tag table that correspond to the first tag are identified 610. The table location data stored in the identified rows is read 615. Order identifiers are read from the table locations 620. The relative values of the order identifiers are compared with the query-specified tag range 625 to determine one or more selected first elements. The second tag is compared to the tag table 630. Rows in the tag table that correspond to the second tag are identified 635. The table location data stored in the identified rows is read 640. Order identifiers are read from the table locations and compared to the order identifier-range identifier pairs of the selected first elements 645. A query response is then output with the second tag elements having order identifiers falling within the ranges of the selected first tag elements 650.

As an example of a regular path expression query, a user could ask the database system to find all paragraphs under the third chapter. The tag table gives the location of the chapter elements. The chapter element with the third order identifier is the third chapter and its range identifier determines a range of order identifier values. The tag table gives the location of the para elements and their order identifiers are compared to the range for the third chapter element. All para elements with order identifiers in that range are then returned. In one implementation, there may be indexes for the chapter elements and para elements that include the order identifiers and can be used to speed up the search. Another example of a regular path expression query is a user request that the database system find the chapter that contains the fourth title. The title elements are searched as discussed above and the fourth order identifier is found. That order identifier is then compared to the order identifiers of the chapter elements to find the one which has the largest order identifier that is less than the order identifier of the title, and the sum of its order identifier and range identifier is larger than the sum of the order identifier and range identifier of the title.

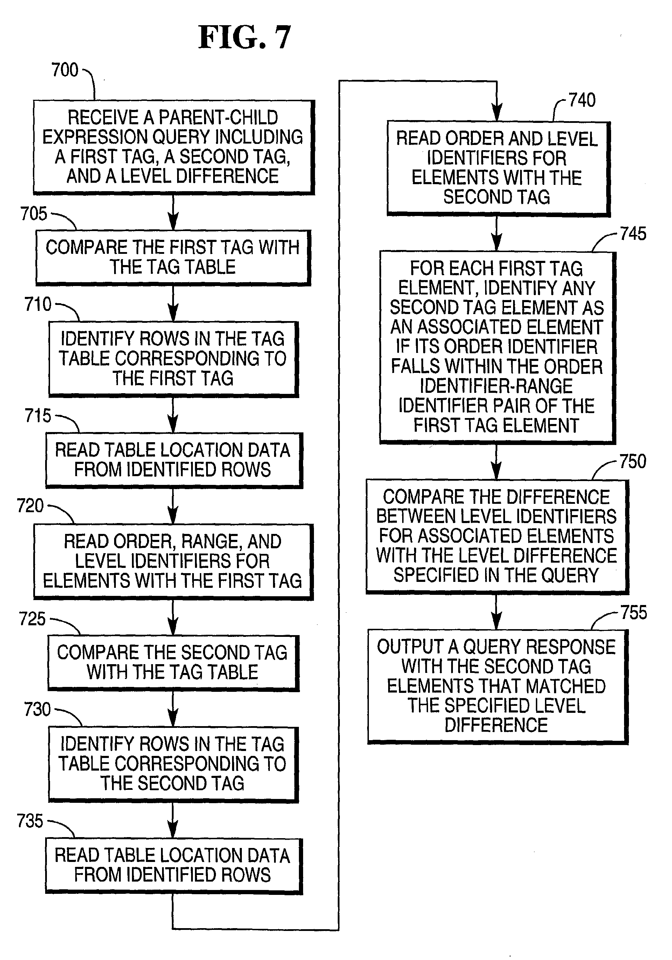

Figure 7 is a flow chart of one method for querying a database-stored element-based document description. In this method, a parent-child expression query is received that includes a first tag, a second tag, and a level difference 700. The first tag is compared to the tag table 705. Rows in the tag table that correspond to the first tag are identified 710. The table location data stored in the identified rows is read 715. Order identifiers, range identifiers, and level identifiers are read from the table locations 720. The second tag is compared to the tag table 725. Rows in the tag table that correspond to the second tag are identified 730. The table location data stored in the identified rows is read 735. Order identifiers and level identifiers are read from the table locations 740. For each first tag element, second tag elements with an order identifier that falls within the range of the first tag element are identified as associated elements 745. The range of the first tag element is determined by its order identifier-range identifier pair. For each pair of a first tag element and an associated second tag element, the difference between the level identifiers is compared to the level difference specified in the query 650, and a query response is then output including all the associated second tag elements with the specified level difference 755.

As an example of a parent-child expression query, a user could ask the database system to retrieve all title directly under chapter elements. The tag table gives the location of the chapter elements. The ranges of each chapter elements can then be determined from the order identifier and range identifier of each chapter element. The order identifiers of the title elements can then be compared to those ranges. For each title element within the range of a chapter element, the level identifiers are compared and those with a difference of 1 are returned as the query response. As discussed above, an order identifier index for each tag can be used to speed up the query execution process.

The foregoing description of the embodiments of the invention has been presented for the purposes of illustration and description. It is not intended to be exhaustive or to limit the invention to the precise form disclosed. Many modifications and variations are possible in light of the above teaching.

## Claims

1. A method for querying a database-stored element-based document description, comprising the steps of:
(a) receiving a query specifying at least one tag;
(b) comparing a specified tag with a tag table;
(c) identifying at least one row of the tag table corresponding to the specified tag;
(d) reading table location data from the at least one row of the tag table; and
(e) outputting a query response including information from one or more database table rows corresponding to the table location data, each database table row including an order identifier and a range identifier.

2. The method of claim 1 wherein the query includes a tag range and further comprising the steps of:
(d1) reading an order identifier from one or more database table rows corresponding to the table location data; and
(d2) comparing the relative value of the order identifier with the tag range.

3. The method of claim 1 where the query specifies a second tag nested within a first tag, steps (b)-(d) are performed for the first tag, and further comprising the steps of:
(d1) determining one or more ranges of order identifier values from order identifier-range identifier pairs in one or more database table rows corresponding to the table location data; and
(d2) performing steps (b)-(d) for the second tag; and
(d3) limiting the query response information of step (e) to information from database rows having order identifiers in the one or more ranges of order identifiers.

4. The method of claim 1 where the query specifies at least two tags and a level difference and further comprising the steps of:
(d1) comparing the difference between a level identifier stored in a database row corresponding to one tag with a level identifier stored in a database row corresponding to another tag with the level difference.

5. The method of claim 1 where the query specifies two tags and a sequential number associated with the first tag, steps (b)-(d) are performed for the first tag and further comprising the steps of:
(d1) comparing the set of order identifiers stored in the one or more database table rows corresponding to the table location data;
(d2) identifying a first order identifier from the set having a position in the set equal to the sequential number;
(d3) performing steps (b)-(d) for the second tag; and
(d4) determining a range of order identifier values from order identifier-range identifier pairs in one or more database table rows corresponding to the table location data that includes the first order identifier.

6. A computer program, stored on a tangible storage medium, for querying a database-stored element-based document description, the program including executable instructions that cause a computer to:
(a) receive a query specifying at least one tag;
(b) compare one of the specified tags with a tag table;
(c) identify at least one row of the tag table corresponding to the specified tag;
(d) read table location data from the at least one row of the tag table; and
(e) output a query response including information from one or more database table rows corresponding to the table location data, each database table row including an order identifier and a range identifier.

7. The computer program of claim 6 wherein the query includes a tag range and the executable instructions also cause the computer to:
(d1) read an order identifier from one or more database table rows corresponding to the table location data; and
(d2) compare the relative value of the order identifier with the tag range.

8. The computer program of claim 6 where the query specifies at least two tags and steps (b)-(d) are performed for each tag.

9. The computer program of claim 6 where the query specifies a second tag nested within a first tag, steps (b)-(d) are performed for the first tag, and the executable instructions also cause the computer to:
(d1) determine one or more ranges of order identifier values from order identifier-range identifier pairs in one or more database table rows corresponding to the table location data; and
(d2) perform steps (b)-(d) for the second tag; and
(d3) limit the query response information of step (e) to information from database rows having order identifiers in the one or more ranges of order identifiers.

10. The computer program of claim 6 where the query specifies at least two tags and a level difference and the executable instructions also cause the computer to:
(d1) compare the difference between a level identifier stored in a database row corresponding to one tag with a level identifier stored in a database row corresponding to another tag with the level difference.

11. The computer program of claim 6 where the query specifies two tags and a sequential number associated with the first tag, steps (b)-(d) are performed for the first tag and the executable instructions also cause the computer to:
(d1) compare the set of order identifiers stored in the one or more database table rows corresponding to the table location data;
(d2) identify a first order identifier from the set having a position in the set equal to the sequential number;
(d3) perform steps (b)-(d) for the second tag; and
(d4) determine a range of order identifier values from order identifier-range identifier pairs in one or more database table rows corresponding to the table location data that includes the first order identifier.

12. A database system for querying a stored element-based document description, the system comprising:
one or more nodes;
a plurality of CPUs, each of the one or more nodes providing access to one or more CPUs;
a plurality of virtual processes, each of the one or more CPUs providing access to one or more virtual processes;
each virtual process configured to manage data stored in one of a plurality of data-storage facilities; and
where the data stored in the plurality of data-storage facilities includes
data representing a first database table, a row of the first database table corresponds to an element of the element-based document description, and that row includes: data describing the element, an order identifier corresponding to the element, and a range identifier corresponding to the element; and
data representing a tag table, one or more rows of the tag table including tags and table location data; and
where a query execution program is configured to:
(a) receive a query specifying at least one tag;
(b) compare one of the specified tags with the tag table;
(c) identify at least one row of the tag table corresponding to the specified tag;
(d) read table location data from the at least one row of the tag table; and
(e) output a query response including information from one or more database table rows corresponding to the table location data, each database table row including an order identifier and a range identifier.

13. The database system of claim 12 wherein the query includes a tag range and the query execution program is further configured to:
(d1) read an order identifier from one or more database table rows corresponding to the table location data; and
(d2) compare the relative value of the order identifier with the tag range.

14. The database system of claim 12 where the query specifies at least two tags and steps (b)-(d) are performed for each tag.

15. The database system of claim 12 where the query specifies a second tag nested within a first tag, steps (b)-(d) are performed for the first tag, and the query execution program is further configured to:
(d1) determine one or more ranges of order identifier values from order identifier-range identifier pairs in one or more database table rows corresponding to the table location data; and
(d2) perform steps (b)-(d) for the second tag; and
(d3) limit the query response information of step (e) to information from database rows having order identifiers in the one or more ranges of order identifiers.

16. The database system of claim 12 where the query specifies at least two tags and a level difference, the row of the first database table includes a level identifier and the query execution program is further configured to:
(d1) compare the difference between a level identifier stored in a database row corresponding to one tag with a level identifier stored in a database row corresponding to another tag with the level difference.

17. The database system of claim 12 where the query specifies two tags and a sequential number associated with the first tag, steps (b)-(d) are performed for the first tag and the query execution program is further configured to:
(d1) compare the set of order identifiers stored in the one or more database table rows corresponding to the table location data;
(d2) identify a first order identifier from the set having a position in the set equal to the sequential number;
(d3) perform steps (b)-(d) for the second tag; and
(d4) determine a range of order identifier values from order identifier-range identifier pairs in one or more database table rows corresponding to the table location data that includes the first order identifier.
